# EUROPÄISCHE PATENTANMELDUNG

(11) **EP 3 826 125 A1**
(43) Veröffentlichungstag der Anmeldung: **26.05.2021**
(21) Anmeldenummer: 19210567.4
(22) Anmeldetag: 21.11.2019
(51) Int. Cl.: H02J 3/18, H02M 1/42, H02J 7/34, H02J 9/06

(54) **VERFAHREN UND VORRICHTUNG ZUR STEUERUNG EINES MIT EINEM EIGENBEDARFSNETZ VERBUNDENEN FREQUENZUMRICHTERS EINER WINDENERGIEANLAGE**

(71) Anmelder: Nordex Energy SE & Co. KG, 22419 Hamburg (DE)
(72) Erfinder: Dr. Nils, Hoffmann, 06114 Halle (DE)
(74) Vertreter: Hauck Patentanwaltspartnerschaft mbB

(57) **Zusammenfassung**

Verfahren zur Steuerung eines mit einem Eigenbedarfsnetz verbundenen Frequenzumrichters einer Windenergieanlage, der über einen Diodengleichrichter mit dem Eigenbedarfsnetz und über einen DC-DC-Steller mit einem Energiespeicher verbunden ist, wobei der DC-DC-Steller bei einem Normalbetrieb zu einer Leistungsfaktorkorrektur des Eigenbedarfsnetzes und bei einem Notbetrieb zu einer Steuerung einer Zwischenkreisspannung des Frequenzumrichters mit dem Energiespeicher angesteuert wird.

## Beschreibung

Die vorliegende Erfindung betrifft ein Verfahren zur Steuerung eines mit einem Eigenbedarfsnetz verbundenen Frequenzumrichters einer Windenergieanlage ebenso wie eine entsprechende Steuervorrichtung.

Das technische Gebiet der Erfindung umfasst die Regelung von netzgebundenen Frequenzumrichtern, welche durch einen passiven Gleichrichter, beispielsweise eine dreipulsige Diodenbrücke, angebunden sind. Ein solcher Frequenzumrichter kann in einer Windenergieanlage beispielsweise vorgesehen sein, um das elektrische Pitchsystem zu versorgen. Eine besondere Aufgabe kommt einem solchen Frequenzumrichter in dem Falle zu, dass bei einem Netzausfall ein sicherer Betrieb, wie beispielsweise ein Verfahren der Rotorblätter aus dem Wind heraus gewährleistet werden soll. Dies wird in der Regel mittels elektrischer Stützsysteme, wie beispielsweise Blei-Säure-Batterien, Lithium-Ionen-Batterien oder auch Kondensatoren, wie beispielsweise Ultra-Caps erreicht. Das elektrische Stützsystem wird in der Regel an den Gleichspannungszwischenkreis des Frequenzumrichters angebunden.

Aus US 2012/0195077 A1 ist ein Gleichrichter für eine primäre Wechselspannung bekannt. Der Gleichrichter weist einen sogenannten PFC-Schaltkreis zur Leistungsfaktorkorrektur auf, der mit der Primärseite verbunden ist. Der PFC-Schaltkreis liefert eine Gleichstromleistungsunterstützung. Zudem ist ein Energiespeicher vorgesehen, der zur Abgabe von elektrischer Energie entladen und zur Aufnahme von elektrischer Energie geladen werden kann. Um zwischen Laden und Entladen entscheiden zu können, wird die an der PFC-Schaltung anliegende Spannung mit einer Referenzspannung verglichen.

Kolar et al. und Friedli et al. beschreiben in den beiden Veröffentlichungen "The Essence of Three-Phase PFC Rectifier Systems", Part 1 and Part 2, IEEE Transactions on Power Electronics, Vol. 28, No. 1, January 2013, Seiten 176 - 198 und IEEE Transactions on Power Electronics, Vol.. 29, No. 2, February 2014, Seiten 543 - 560, wie eine drei-phasige Leistungsfaktorkorrektur mit sinuidalen Eingangsströmen und gesteuerter Ausgangsspannung gesteuert werden können. Verschiedene Typen von Leistungsfaktorkorrekturschaltungen werden ausführlich in Teil 2 der Veröffentlichung diskutiert.

Der vorliegenden Erfindung liegt die Aufgabe zugrunde, in einem Eigenbedarfsnetz einer Windenergieanlage die Leistungsqualität zu verbessern und insbesondere unnötige Blind- und Oberschwingungsleistungen zu verhindern.

Erfindungsgemäß wird die Aufgabe durch ein Verfahren mit den Merkmalen aus Anspruch 1 sowie eine Steuervorrichtung mit den Merkmalen aus Anspruch 8 gelöst. Vorteilhafte Ausgestaltungen bilden die Gegenstände der Unteransprüche.

Das erfindungsgemäße Verfahren ist vorgesehen und bestimmt zur Steuerung eines mit einem Eigenbedarfsnetz verbundenen Frequenzumrichters einer Windenergieanlage. Der Frequenzumrichter ist über einen Diodengleichrichter mit dem Eigenbedarfsnetz und über einen DC-DC-Steller mit einem Energiespeicher verbunden. Erfindungsgemäß wird der DC-DC-Steller bei einem Normalbetrieb zu einer Leistungsfaktorkorrektur des Eigenbedarfsnetzes angesteuert. Dies erlaubt in vorteilhafter Weise für den Diodengleichrichter einen passiven Gleichrichter zu verwenden und zudem die Netzrückwirkungen des passiven Gleichrichters zu reduzieren. Der verwendete Ausdruck DC-DC-Steller ist dabei synonym zu dem ebenfalls gebräuchlichen Begriff des Hoch-/Tiefsetzstellers. Die Leistungsfaktorkorrektur wird auch als PFC (Power Factor Correction) bezeichnet.

Erfindungsgemäß ist weiterhin vorgesehen, bei einem Notbetrieb zu einer Steuerung einer Zwischenkreisspannung des Frequenzumrichters aus dem Energiespeicher den DC-DC-Steller entsprechend anzusteuern. Der DC-DC-Steller speist also die Zwischenkreisspannung des Frequenzumrichters aus dem Energiespeicher und erlaubt es so, auch beispielsweise bei einem Netzfehler oder Netzausfall, die Zwischenkreisspannung aufrecht zu erhalten, um beispielsweise im Notbetrieb vorgesehene Verbraucher zu versorgen. Der DC-DC-Steller besitzt den besonderen Vorteil, dass er auch im Normalbetrieb für die Leistungsfaktorkorrektur zur Verfügung steht.

In einer bevorzugten Weiterbildung des erfindungsgemäßen Verfahrens ist vorgesehen, dass in dem Notbetrieb eine Ansteuerung des DC-DC-Stellers zur Leistungsfaktorkorrektur unterbleibt. In dem Notbetrieb, insbesondere bei einem Fehler oder Ausfall des Netzes, kann über den DC-DC-Steller und dessen Ansteuerung der vorgesehene Energiespeicher ganz oder teilweise in den Gleichspannungszwischenkreis entladen werden. Über den Gleichspannungszwischenkreis kann dann mit Hilfe eines aktiven Wechselrichters ein oder mehrere Antriebe für den Notbetrieb angesteuert werden.

In einer bevorzugten Weiterbildung des Verfahrens steuert der Frequenzumrichter einen elektrischen Pitch- oder Azimutantrieb an. Beide Antriebe können über eine entsprechende Steuerung im Notbetrieb jeweils angesteuert werden. Zudem wird ein elektrischer Pitch- oder Azimutantrieb aus einem Eigenbedarfsnetz gespeist.

In einer bevorzugten Ausgestaltung sind als Energiespeicher ein Kondensator und/oder eine Batterie vorgesehen. Der Energiespeicher ist dabei bevorzugt derart bemessen, dass dessen Kapazität ausreicht, notwendige Maßnahmen für den Notbetrieb auszuführen.

In einer weiteren bevorzugten Ausgestaltung des Verfahrens wird zumindest im Notbetrieb ein Istwert der Zwischenkreisspannung erfasst und der DC-DC-Steller derart angesteuert, dass die Zwischenkreisspannung mindestens einen Spannungsmindestwert hält. Bevorzugt wird im Notbetrieb der DC-DC-Steller über einen Pulsmustergenerator für eine Regelung der Zwischenkreisspannung angesteuert.

Bei dem erfindungsgemäßen Verfahren kommt bevorzugt ein bidirektionaler DC-DC-Steller zum Einsatz, der mindestens ein IGBT-Bauelement besitzt.

Erfindungsgemäß wird die Aufgabe ebenfalls durch eine Steuervorrichtung mit den Merkmalen aus Anspruch 8 gelöst. Die erfindungsgemäße Steuervorrichtung ist vorgesehen und eingerichtet für einen von einem Eigenbedarfsnetz gespeisten Frequenzumrichter einer Windenergieanlage. Der Frequenzumrichter ist über einen Diodengleichrichter mit dem Eigenbedarfsnetz und über einen DC-DC-Steller mit einem Energiespeicher verbunden. Der DC-DC-Steller ist bei einem Normalbetrieb zu einer Leistungsfaktorkorrektur des Eigenbedarfsnetzes vorgesehen. In einem Notbetrieb erfolgt über den DC-DC-Steller die Ansteuerung der Zwischenkreisspannung des Frequenzumrichters aus dem Energiespeicher. Bei der erfindungsgemäßen Vorrichtung hat der DC-DC-Steller eine doppelte Funktion: Einerseits führt er eine Leistungsfaktorkorrektur im Normalbetrieb für das Eigenbedarfsnetz durch und erhöht so dessen Qualität im Hinblick auf Oberschwingungen und Blindleistungsanteile. Andererseits steuert er die Zwischenkreisspannung im Notbetrieb.

In einer bevorzugten Weiterbildung der Vorrichtung ist der DC-DC-Steller nicht für eine Leistungsfaktorkorrektur in dem Notbetrieb ausgebildet. Im Notbetrieb steuert der DC-DC-Steller die Zwischenkreisspannung oder regelt diese. Etwaige Nachteile für das Eigenbedarfsnetz können im Notbetrieb hingenommen werden.

Bevorzugt ist der Frequenzumrichter vorgesehen und ausgebildet, um einen elektrischen Pitch- und/oder Azimutantrieb anzusteuern.

In einer bevorzugten Weiterbildung ist in dem Zwischenkreis ein Spannungssensor vorgesehen, wobei der DC-DC-Steller mindestens in einem Notbetrieb, abhängig von der gemessenen Zwischenkreisspannung, gesteuert wird.

In einer zweckmäßigen Weiterbildung ist ein Pulsmustergenerator für den DC-DC-Steller vorgesehen, der im Notbetrieb für eine Regelung der Zwischenkreisspannung angesteuert wird. Bevorzugt handelt es sich bei dem DC-DC-Steller um einen bidirektionalen DC-DC-Steller, der mindestens einen Leistungshalbleiter, beispielsweise in Form von einem IGBT (insulated-gate bipolar transistor), einen SiC-, GaN- oder einen MOSFET-Halbleiter als Bauteil aufweist.

Die vorliegende Erfindung wird nachfolgend an zwei Ausführungsbeispielen näher erläutert. Es zeigen:
- Fig. 1: einen im Eigenbedarfsnetz angeschlossenen Motor, der über einen aktiven Wechselrichter angesteuert wird,
- Fig. 2: einen im Eigenbedarfsnetz angeschlossenen Motor, der über einen aktiven Wechselrichter angesteuert wird, wobei ein bidirektionaler Hoch-Tiefsetzsteller (DC-DC-Steller) für eine Leistungsfaktorkorrektur angesteuert wird und
- Fig. 3: den Übergang zwischen Leistungsfaktorkorrektur und fehlender Leistungsfaktorkorrektur.

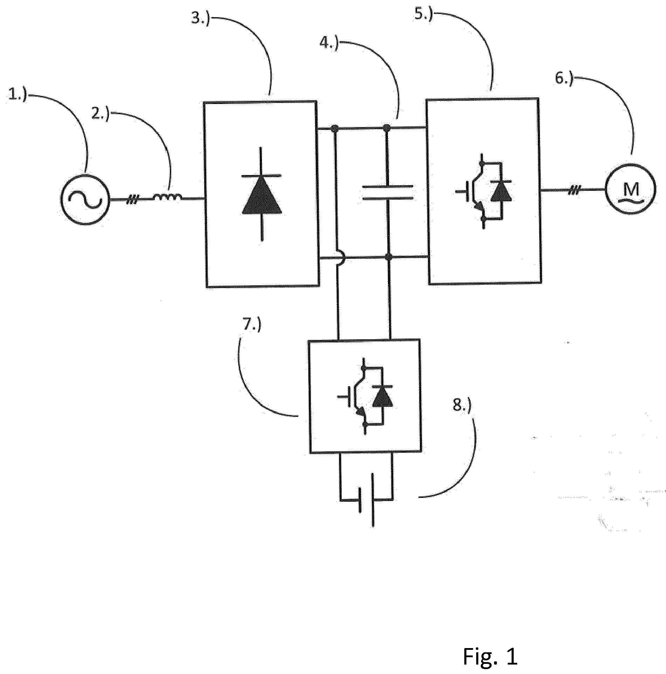

Fig.1 zeigt einen Eigenbedarfsnetz 1, das in dem vorliegenden Beispiel dreiphasig ausgebildet ist. Das Eigenbedarfsnetz 1 zeigt einen passiven Netz-/Oberschwingungsfilter, hier in Form einer Induktivität 2. Ein passiver Diodengleichrichter 3, hier als dreiphasiger Diodengleichrichter ausgebildet, ist ausgangsseitig mit einem Gleichspannungszwischenkreis 4 verbunden. Der Gleichspannungszwischenkreis 4 speist einen aktiven Wechselrichter 5, der hier beispielhaft als ein dreiphasiger IGBT-basierter Wechselrichter dargestellt ist. Über den aktiven Wechselrichter 5 wird der Motor 6 angesteuert. Beispielhaft ist hier ein Asynchronmotor dargestellt, grundsätzlich sind aber auch ein Synchron- oder ein DC-Motor möglich.

Der Gleichspannungszwischenkreis 4 ist mit einem bidirektionalen Hoch-/Tiefsetzsteller (DC-DC-Steller) 7 verbunden. Dieser ist mit einem Energiespeichersystem 8 verbunden. Hierbei kann es sich um einen Kondensator, beispielsweise eine Ultrakapazität handeln oder um Akkumulatoren, wie beispielsweise Bleisäure-Akkumulatoren oder Lithium-Ionen-Akkumulatoren.

Vereinfacht gesprochen, kennt der DC-DC-Steller zwei Betriebszustände. Im Normalbetrieb erfolgt eine Leistungsfaktorkorrektur durch den DC-DC-Steller. Liegt ein Notbetrieb vor, beispielsweise weil ein Spannungsabfall im Eigenbedarfsnetz auftritt, so wird der DC-DC-Steller 7 angesteuert, um aus dem Energiespeicher 8 den Gleichspannungszwischenkreis 4 zu speisen.

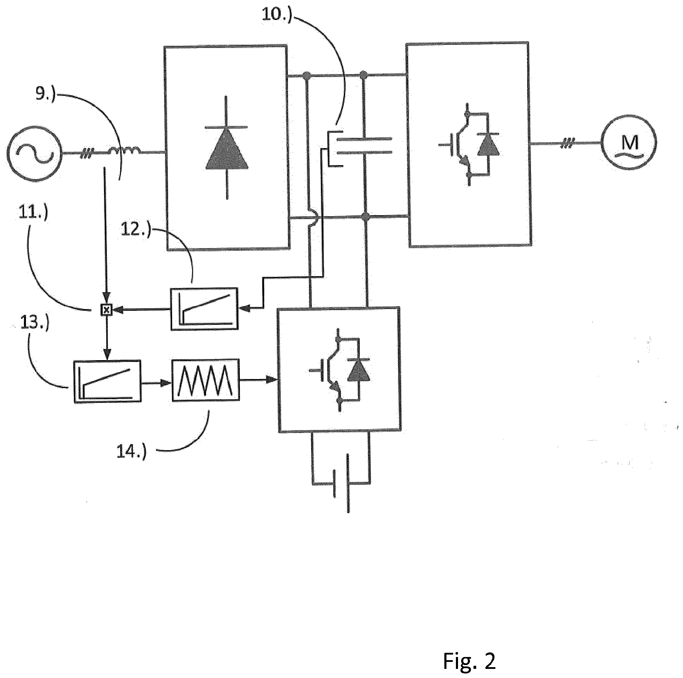

Fig. 2 zeigt grundsätzlich dieselbe Schaltungsanordnung wie in Fig. 1, wobei zusätzlich noch eine beispielhafte PFC-Regelung aufgenommen wurde. Für die Leistungsfaktorkorrektur durch den DC-DC-Steller 7 wird mit einem Sensor 9 die Netzspannung des Eigenbedarfsnetzes gemessen. Ebenfalls wird mit einem Sensor10 die Zwischenkreisspannung gemessen. Über einen Spannungsregler 12 wird die gemessene Zwischenkreisspannung auf einen Multiplizierer 11 gegeben und gemeinsam mit der gemessenen Netzspannung multiziert. Der Spannungsregler ist hier beispielhaft als ein PI-Regler ausgebildet. Das Produkt aus Netzspannung und geregelter Zwischenkreisspannung wird auf den Stromregler 13 gegeben, der vorliegend auch als ein PI-Regler ausgebildet wird. Dies wird über einen Pulsmustergenerator 14 an den DC-DC-Steller angelegt, um aus dem Energiespeicher 8 die Zwischenkreisspannung 4 zu regeln.

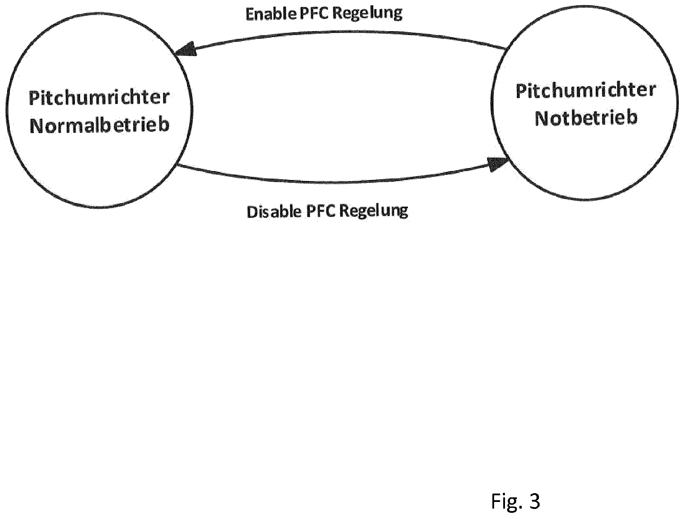

In Form eines Zustandsdiagramms ist die Wirkungsweise des DC-DC-Stellers in Fig. 3 schematisch dargestellt. In einem Normalbetrieb wird mit einer PFC-Regelung gearbeitet, um die Qualität im Eigenbedarfsnetz zu verbessern. Wird in einen Notbetrieb übergewechselt, so wird die PFC-Regelung ausgeschaltet.

Bei der Ansteuerung des DC-DC-Stellers zur elektrischen Stützung der Spannung im Zwischenkreis sind verschiedene Aspekte zu beachten. Bei der vorgesehenen Anbindung des Energiespeichers 8 über einen bidirektionalen DC-DC-Steller ist zudem noch ein Lademanagement für den Energiespeicher vorzusehen. Sei es, dass dieser aus dem Zwischenkreis geladen wird oder auch in regelmäßigen Abständen für einen ordnungsgemäßen Betrieb entladen werden kann. Der besondere Vorteil der Erfindung liegt darin, dass ein Frequenzumrichter mit einem passiven Gleichrichter in Verbindung mit einem bidirektionalen DC-DC-Steller zur Anbindung eines Energiespeichers vorgesehen werden kann. Der bidirektionale DC-DC-Steller reduziert zudem im Normalbetrieb die Netzrückwirkungen des passiven Gleichrichters, indem dieser als Leistungsfaktorkorrekturfilter angesteuert wird. Diese Leistungsfaktorkorrektur wird ausschließlich durch Ansteuerung des bidirektionalen DC-DC-Stellers realisiert und ist damit eine erweiterte Steuerungsfunktion des gesamten Umrichters mit DC-DC-Steller.

### Bezugszeichenliste

- 1: Eigenbedarfsnetz
- 2: Netz-/Oberschwingungsfilter
- 3: Diodengleichrichter
- 4: Gleichspannungszwischenkreis
- 5: Wechselrichter
- 6: Motor
- 7: Hoch-/Tiefsetzsteller (DC-DC-Steller)
- 8: Energiespeicher
- 9: Sensor für Netzspannung
- 10: Sensor für Zwischenkreisspannung
- 11: Multiplizierer
- 12: Spannungsregler
- 13: Stromregler
- 14: Pulsmustergenerator

## Patentansprüche

1. Verfahren zur Steuerung eines mit einem Eigenbedarfsnetz (1) verbundenen Frequenzumrichters (5) einer Windenergieanlage, der über einen Diodengleichrichter (3) mit dem Eigenbedarfsnetz (1) und über einen DC-DC-Steller (7) mit einem Energiespeicher (8) verbunden ist, **dadurch gekennzeichnet, dass** der DC-DC-Steller (7) bei einem Normalbetrieb zu einer Leistungsfaktorkorrektur des Eigenbedarfsnetzes (1) und bei einem Notbetrieb zu einer Steuerung einer Zwischenkreisspannung (14) des Frequenzumrichters (5) mit dem Energiespeicher (8) angesteuert wird.

2. Verfahren nach Anspruch 1, **dadurch gekennzeichnet, dass** in dem Notbetrieb eine Ansteuerung des DC-DC-Stellers (7) zur Leistungsfaktorkorrektur unterbleibt.

3. Verfahren nach Anspruch 1 oder 2, **dadurch gekennzeichnet, dass** der Frequenzumrichter (5) einen elektrischen Pitch- und/oder Azimutantrieb ansteuert.

4. Verfahren nach einem der Ansprüche 1 bis 3, **dadurch gekennzeichnet, dass** als Energiespeicher (8) ein Kondensator und/oder eine Batterie vorgesehen ist.

5. Verfahren nach einem der Ansprüche 1 bis 4, **dadurch gekennzeichnet, dass im** Notbetrieb die Zwischenkreisspannung erfasst und der DC-DC-Steller (7) hiervon abhängig angesteuert wird.

6. Verfahren nach Anspruche 5, **dadurch gekennzeichnet, dass** im Notbetrieb der DC-DC-Steller (7) über einen Pulsmustergenerator für eine Regelung der Zwischenkreisspannung angesteuert wird.

7. Verfahren nach einem der Ansprüche 1 bis 6, **dadurch gekennzeichnet, dass** der bidirektionale DC-DC-Steller (7) mindestens einen Leistungshalbleiter aufweist.

8. Vorrichtung für einen von einem Eigenbedarfsnetz (1) gespeisten Frequenzumrichter (5) einer Windenergieanlage, der über einen Diodengleichrichter (3) mit dem Eigenbedarfsnetz und über einen DC-DC-Steller mit einem Energiespeicher (8) verbunden ist, **dadurch gekennzeichnet, dass** der DC-DC-Steller (7) bei einem Normalbetrieb des Eigenbedarfsnetzes (1) zu einer Leistungsfaktorkorrektur und bei einem Notbetrieb zu einer Steuerung einer Zwischenkreisspannung des Frequenzumrichters (5) mit dem Energiespeicher (8) angesteuert wird.

9. Vorrichtung nach Anspruch 8, **dadurch gekennzeichnet, dass** der DC-DC-Steller (7) nicht für eine Leistungsfaktorkorrektur in dem Notbetrieb ausgebildet ist.

10. Vorrichtung nach Anspruch 8 oder 9, **dadurch gekennzeichnet, dass der** Frequenzumrichter (5) einen elektrischen Pitch- und/oder Azimutantrieb ansteuert.

11. Vorrichtung nach einem der Ansprüche 8 bis 10, **dadurch gekennzeichnet, dass** als Energiespeicher (8) ein Kondensator und/oder eine Batterie vorgesehen ist.

12. Vorrichtung nach einem der Ansprüche 8 bis 11, **dadurch gekennzeichnet, dass** in dem Zwischenkreis ein Spannungssensor (10) vorgesehen ist und der DC-DC-Steller (7) mindestens in einem Notbetrieb abhängig der gemessenen Zwischenkreisspannung gesteuert wird.

13. Vorrichtung nach Anspruche 12, **dadurch gekennzeichnet, dass** einen Pulsmustergenerator (14) für den DC-DC-Steller (7) vorgesehen ist, der im Notbetrieb für eine Regelung der Zwischenkreisspannung angesteuert wird.

14. Vorrichtung nach einem der Ansprüche 8 bis 13 **dadurch gekennzeichnet, dass** der bidirektionale DC-DC-Steller (7) mindestens einen Leistungshalbleiter aufweist.
